(19) Europäisches Patentamt
European Patent Office
Office européen des brevets

(11) **EP 4 621 400 A1**

(12) **EUROPEAN PATENT APPLICATION**
published in accordance with Art. 153(4) EPC

(43) Date of publication:
**24.09.2025 Bulletin 2025/39**

(21) Application number: **23891620.9**

(22) Date of filing: **15.11.2023**

(51) International Patent Classification (IPC):
***G01N 27/22*** (2006.01)

(52) Cooperative Patent Classification (CPC):
**G01N 27/22**

(86) International application number:
**PCT/JP2023/041117**

(87) International publication number:
**WO 2024/106473 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.11.2022  JP 2022183649**

(71) Applicant: **Kyocera Corporation
Kyoto-shi, Kyoto 612-8501 (JP)**

(72) Inventor: **NAKAMURA, Katsumi
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **BUBBLE FRACTION SENSOR, FLOWMETER EMPLOYING SAME, AND CRYOGENIC LIQUID TRANSFER TUBE**

(57)     A void fraction sensor of the present disclosure includes: an insulating inner pipe including a through hole through which a cryogenic liquid flows; at least one pair of electrodes mounted on an outer peripheral surface of the inner pipe; a conductive pin connected to each of the one pair of electrodes; a housing surrounding the inner pipe and including a first insertion hole into which the conductive pin is inserted: and a filling member disposed at least between an inner wall surface of the housing and a back surface on an opposite side to a facing front surface of each of the at least one pair of electrodes. An absolute value of a temperature coefficient $\tau\varepsilon1$ of relative permittivity of the filling member at -196°C to 20°C is equal to or less than an absolute value of a temperature coefficient $\tau\varepsilon2$ of relative permittivity of the inner pipe at -196°C to 20°C.

FIG. 1

EP 4 621 400 A1

**Description**

TECHNICAL FIELD

The present disclosure relates to a void fraction sensor for measuring a void fraction of a cryogenic liquid such as liquid hydrogen, a flowmeter using the same, and a cryogenic liquid transfer pipe.

BACKGROUND OF INVENTION

With the recent trend of reducing greenhouse gas emissions, the use of hydrogen as a potent energy storage medium has been attracting attention. In particular, liquid hydrogen has a high volumetric efficiency and can be stored for a long period of time, and various techniques for utilizing liquid hydrogen have been developed. However, a method for accurately measuring the flow rate which is required in handling a large volume of liquid hydrogen for industrial use has not been established. A major reason for this is that liquid hydrogen is a fluid which is very easily vaporized and its gas-to-liquid ratio fluctuates greatly.

That is, liquid hydrogen is a liquid having an extremely low temperature (boiling point -253°C) and having very high thermal conductivity and low latent heat, which causes immediate generation of voids. Therefore, in a transfer pipe, liquid hydrogen is in a so-called gas-liquid two-phase flow in which gas and liquid are mixed.
Because of the large fluctuation of the void content percentage, the flow rate of liquid hydrogen cannot be accurately determined by only measuring the flow velocity in the pipe, as in ordinary liquids.

In view of the above, a void fraction meter that measures a void fraction indicating a gas phase volume percentage of the gas-liquid two-phase flow is under development. As such a void fraction meter, Patent Document 1 has proposed a capacitive void fraction meter that measures an electrostatic capacitance using one pair of electrodes.

Patent Document 1 proposes a capacitive void fraction meter including an instrument pipe body interposed, via an electrically insulating joint, in the middle of a piping system through which a fluid composed of a gas phase portion and a liquid phase portion flows, a pair of electrodes disposed on an outer peripheral surface of the instrument pipe body facing each other across a pipe axis, an electrostatic shield cylinder surrounding and externally fitted around the pair of electrodes, a bushing externally fitted around the electrostatic shield cylinder with a sealed space in which an inert gas or a hygroscopic material is enclosed, and a measuring instrument connected to the pair of electrodes for measuring an electrostatic capacitance induced between the pair of electrodes.
Patent Document 1 describes that the electrostatic shield cylinder is molded by filling an electrically insulating plastic material in a space between the electrode of the capacitive void fraction meter and the electrostatic shield cylinder (see a first drawing of Patent Document 1).

CITATION LIST

PATENT LITERATURE

Patent Document 1: JP H01-93559 UM-A

SUMMARY

A void fraction sensor of the present disclosure includes: an inner pipe including a through hole through which a cryogenic liquid flows; at least one pair of electrodes mounted on an outer surface of the inner pipe; a conductive pin connected to each of the at least one pair of electrodes; a housing surrounding the inner pipe and including a first insertion hole into which the conductive pin is inserted; and a filling member disposed at least between an inner wall surface of the housing and a back surface on an opposite side to a facing front surface of each of the at least one pair of electrodes, wherein an absolute value of a temperature coefficient $\tau\varepsilon 1$ of relative permittivity of the filling member at -196°C to 20°C is equal to or less than an absolute value of a temperature coefficient $\tau\varepsilon 2$ of relative permittivity of the inner pipe at -196°C to 20°C.

A flowmeter of the present disclosure measures a flow rate of a cryogenic liquid flowing through the through hole of the inner pipe, and includes the void fraction sensor described above, and a flow velocity meter configured to measure a flow velocity of the cryogenic liquid flowing through the through hole.

A cryogenic liquid transfer pipe of the present disclosure includes the flowmeter described above.

BRIEF DESCRIPTION OF THE DRAWINGS

FIG. 1 is a schematic vertical cross-sectional view illustrating a void fraction sensor according to an embodiment of the present disclosure.

FIG. 2 is a graph for explaining temperature characteristics of relative permittivity.

FIG. 3 is a perspective view illustrating a void fraction sensor according to another embodiment of the present disclosure.

FIG. 4 is an exploded perspective view of the void fraction sensor illustrated in FIG. 3.

FIG. 5 is a schematic vertical cross-sectional view of the void fraction sensor illustrated in FIG. 3.

FIG. 6 is a schematic vertical cross-sectional view illustrating a void fraction sensor according to still another embodiment of the present disclosure.

FIG. 7A is an exploded cross-sectional view illustrating a partial variation of the void fraction sensor illustrated in FIG. 1.

FIG. 7B is a perspective view illustrating a portion A in FIG. 7A.

FIG. 8 is a schematic horizontal cross-sectional view illustrating a void fraction sensor according to a different embodiment of the present disclosure.

DESCRIPTION OF EMBODIMENTS

In the void fraction meter described in Patent Document 1, fluid such as a cryogenic liquid flows through the instrument pipe body. When a large temperature change occurs on an outer peripheral side of the instrument pipe body, for example, a plastic material such as a PET resin has a large temperature coefficient of relative permittivity (that is, large temperature dependency). Therefore, an electrostatic capacitance between the electrode and the electrostatic shield cylinder changes significantly, and a void fraction cannot be measured accurately.

Therefore, an object of the present disclosure is to provide a void fraction sensor capable of accurately measuring a void fraction in a pipe through which a cryogenic liquid flows, a flowmeter using the same, and a cryogenic liquid transfer pipe.

Hereinafter, a void fraction sensor according to an embodiment of the present disclosure will be described with reference to the drawings. In the following description, a void fraction sensor that measures a void fraction when liquid hydrogen is used as a cryogenic liquid will be described. However, for ease of explanation, each of the drawings referenced below illustrates the embodiment of the present disclosure in a simplified manner. Accordingly, the void fraction sensor described below may include any constituent member which is not illustrated in each of the referred drawings. The dimensions of the members in each of the drawings do not faithfully represent the actual dimensions of the constituent members, the dimension ratios of the respective members, or the like.

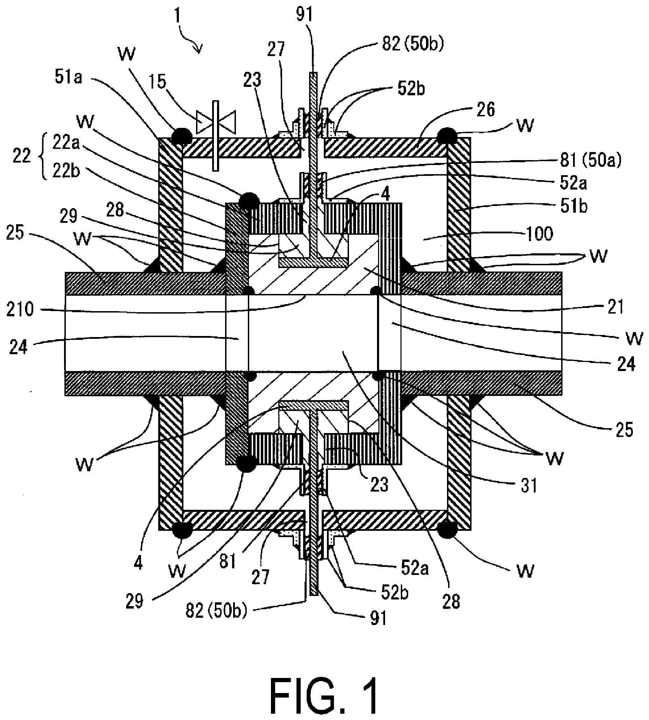

As illustrated in FIG. 1, a void fraction sensor 1 of the embodiment includes: an insulating inner pipe 21 including a through hole 31 through which liquid hydrogen flows; at least one pair of electrodes 4 and 4 mounted on an outer surface of the inner pipe 21; a conductive pin 91 connected to each electrode 4; a housing 22 surrounding the inner pipe 21 and including a connection hole 24 communicating with the through hole 31 and a first insertion hole 23 through which the conductive pin 91 is inserted; a first hermetic terminal 81 for fixing the conductive pin 91; and a filling member 29 accommodated at least between an inner wall surface of the housing 22 and a back surface on an opposite side to a facing front surface of each electrode 4. The one pair of electrodes 4 and 4 are disposed to face each other via an axial center of the inner pipe 21.

The insulating inner pipe 21 is an inner pipe having a volume specific resistance value of equal to or greater than $10^{10}$ Ω·m at 20°C.

A metal pipe 25 communicating with the through hole 31 of the inner pipe 21 is disposed at each of both ends of the housing 22 via the connection hole 24 of the housing 22.

The inner pipe 21 includes one pair of recessed portions 28 opening outward, and the electrode 4 is mounted on a bottom surface of each of the one pair of recessed portions 28. The filling member 29 is accommodated in the recessed portion 28. In the embodiment illustrated in FIG. 1, the filling member 29 abuts on the inner wall surface of the housing 22, extends into the first insertion hole 23, and is in contact with the first hermetic terminal 81. Therefore, the extending filling member 29 reduces a change in impedance, and as a result, measurement accuracy of a void fraction is improved. The filling member 29 fills at least a part of an inside of the first insertion hole 23, and thus also improves airtightness inside the housing 22. Note that the filling member 29 need not be in contact with the first hermetic terminal 81.

The housing 22 includes a frame body portion 22a accommodating the inner pipe 21 and a cover portion 22b sealing an opening of the frame body portion 22a. After the inner pipe 21 is accommodated in the frame body portion 22a, the frame body portion 22a and the cover portion 22b are bonded to each other by welding or brazing. The frame body portion 22a and the cover portion 22b each include an opening communicating with the through hole 31 of the inner pipe 21, that is the connection hole 24, and the metal pipe 25 is welded or brazed to each of the frame body portion 22a and the cover portion 22b to communicate with the through hole 31 via each opening.

Two annular portions 51a and 51b are located outside the housing 22 in an axial direction with the housing 22 interposed therebetween. Each of the annular portions 51a and 51b includes an axial hole coaxial with the inner pipe 21, and is welded or brazed to an outer peripheral surface of the metal pipe 25 inserted through the axial hole. An outer pipe 26 is disposed between the annular portions 51a and 51b, and both end portions of the outer pipe 26 are bonded to each of the annular portions 51a and 51b. The outer pipe 26 includes a second insertion hole 27 which opens in a radial direction.

Note that in FIG. 1, a welded or brazed joint portion is indicated by a reference sign W.

The first hermetic terminal 81 for fixing the conductive pin 91 is located outside the first insertion hole 23 located in the housing 22.

Similarly, a second hermetic terminal 82 for fixing the conductive pin 91 which is connected to each electrode 4 individually is located outside the second insertion hole 27.

The first hermetic terminal 81 may be located in an inner portion or on an inner side of the first insertion hole 23. Similarly, the second hermetic terminal 82 may be located in an inner portion or on an inner side of the second insertion hole 27.

The outer pipe 26 is located with a vacuum exhaust valve 15 (for example, a vacuum exhaust needle valve) to form a vacuum space 100 (heat insulating layer) between the housing 22 and the outer pipe 26. The vacuum space 100 located between the housing 22 and the outer pipe 26 as described above reduces vaporization of liquid hydrogen due to an outside air temperature, improves heat insulating performance with respect to the inner pipe 21, reduces generation of voids, and improves the measurement accuracy of the void fraction.

The inner pipe 21 preferably contains a ceramic, for example, a ceramic containing aluminum oxide as a main constituent. When aluminum oxide is the main constituent, the inner pipe 21 can have excellent mechanical properties while having a relatively low raw material price and relatively low manufacturing costs.

The inner pipe 21 containing a ceramic containing aluminum oxide as the main constituent may contain, for example, silicon, magnesium, and calcium. For example, when these elements are converted into oxides, $SiO_2$ accounts for 0.3 mass% to 1 mass%, MgO accounts for 0.1 mass% to 0.4 mass%, and CaO accounts for 0.04 mass% to 0.08 mass% out of a total of 100 mass% of the constituents constituting the ceramic.

The inner pipe 21 may contain anorthite ($CaAl_2Si_2O_8$). Since anorthite has a smaller coefficient of linear expansion than aluminum oxide, the inclusion of anorthite can improve thermal shock resistance. In particular, the inner pipe 21 preferably contains a low thermal expansion ceramic. The low thermal expansion ceramic refers to a ceramic having a coefficient of linear expansion equal to or less than $0 \pm 20$ ppb/K at 22°C. The low thermal expansion ceramic having a low coefficient of linear expansion reduces the risk of breakage of the low thermal expansion ceramic when it is subjected to a thermal shock caused by a cryogenic liquid including liquid hydrogen.

Specifically, the low thermal expansion ceramic preferably contains: cordierite as a main crystal phase; alumina, mullite, and sapphirine as a sub-crystal phase; and an amorphous phase containing Ca as a grain boundary phase. The crystal phase ratio of the main crystal phase preferably accounts for 95 mass% to 97.5 mass%, and the crystal phase ratio of the sub-crystal phase preferably accounts for 2.5 mass% to 5 mass%. A content of Ca in a total amount is preferably from 0.4 mass% to 0.6 mass% in terms of CaO, and a content of zirconia in the total amount is preferably from 0.1 mass% to 1.0 mass%. The relative permittivity of the ceramic constituting the inner pipe 21 becomes close to that of the cryogenic liquid, which improves a high frequency characteristic, allowing further improvement of the measurement accuracy of the void fraction.

The crystal phase and its ratio in the low thermal expansion ceramic can be analyzed by the Rietveld method with an X-ray diffractometer using $CuK\alpha$ beams for the analysis target range of diffraction angle $2\theta$ = 8 to 100 degrees.

The inner pipe 21 may contain, for example, a ceramic containing a silicon nitride or sialon as a main constituent. Having a high mechanical strength and a thermal shock resistance, these ceramics have less likelihood of breakage even when they are subjected to thermal shock.

Specifically, these ceramics contain calcium oxide, aluminum oxide, and an oxide of a rare earth element. The contents of calcium oxide and aluminum oxide are from 0.3 mass% to 1.5 mass% and from 14.2 mass% to 48.8 mass%, respectively, out of a total of 100 mass% of calcium oxide, aluminum oxide, and the oxide of the rare earth element, and the balance is the oxide of the rare earth element. The silicon nitride is $\beta$-sialon represented by a composition formula $Si_{6-z}Al_zO_zN_{8-z}$ (here, z = 0.1 to 1) and has an average crystal grain size equal to or less than 20 $\mu$m (excluding 0 $\mu$m).

The main constituent of a ceramic refers to a component accounting for equal to or greater than 60 mass% out of 100 mass% of all components constituting the ceramic. In particular, the main constituent may preferably be a component that accounts for equal to or greater than 95 mass% out of 100 mass% of the components constituting the ceramic. The components constituting the ceramic may be identified by using an X-ray diffractometer (XRD). For the content of each component, after the component is identified, a content of an element constituting the component is determined using an X-ray fluorescence analyzer (XRF) or an ICP emission spectrophotometer and is converted into the identified component.

The relative density of a ceramic is, for example, from 92% to 99.9%. The relative density, relative to the theoretical density of a ceramic, is expressed as a percentage (ratio) of the apparent density of a ceramic which is determined in accordance with JIS R 1634-1998.

The ceramic includes closed pores, and a value obtained by subtracting an average equivalent circle diameter of the closed pores from an average distance between the centers of gravity of adjacent closed pores may be from 8 $\mu$m to 18 $\mu$m (this value will hereinafter be referred to as the distance between the closed pores). The closed pores are independent of each other.

When the interval between the closed pores is equal to or greater than 8 $\mu$m, the closed pores are present in a relatively dispersed manner which increases mechanical strength. When the interval between the closed pores is equal to or less than 18 $\mu$m, even if a microcrack originating from the contour of a closed pore occurs due to repeated cold thermal shocks, the likelihood of the extension of the microcrack being blocked is high due to the surrounding closed pores. This means that the inner pipe 21 made of the ceramic having the interval between the closed pores from 8 $\mu$m to 18 $\mu$m can be used over a long period of time.

The skewness of the equivalent circle diameter of the closed pores may be larger than the skewness of the distance between the centers of gravity of the closed pores. The skewness is an index (a statistic) indicating how much a distribution is distorted from the normal distribution. That is, the skewness indicates the bilateral symmetry of the distribution. When the skewness is greater than 0, the tail of the distribution extends to the right. When the skewness is 0, the distribution is bilaterally symmetrical. When the skewness is less than 0, the tail of the distribution extends to the left.

Overlapping histograms of the equivalent circle diameter and the distance between the centers of gravity of the closed pores indicate that the mode value of the equivalent circle diameter is located on the left side (zero side) of the mode value of the distance between the centers of gravity of the closed pores, when the skewness of the equivalent circle diameter is larger than the skewness of the distance between the centers of gravity. This means that many closed pores with small equivalent circle diameters are present and such closed pores are present sparsely, such that the inner pipe 21 having both mechanical strength and thermal shock resistance can be produced.

For example, the skewness of the equivalent circle diameter of the closed pores is equal to or greater than 1, and the skewness of the distance between the centers of gravity of the closed pores is equal to or less than 0.6. The difference between the skewness of the equivalent circle diameter of the closed pores and the skewness of the distance between the centers of gravity of the closed pores is equal to or greater than 0.4.

To determine the distance between the centers of gravity and the equivalent circle diameter of the closed pores, the ceramic member is polished on a copper disk using diamond abrasive grains having an average grain diameter $D_{50}$ of 3 $\mu$m from one end surface of the ceramic member along the axial direction. Subsequently, polishing is then performed on a tin disc using diamond abrasive grains having an average grain diameter $D_{50}$ of 0.5 $\mu$m to prepare a polished surface having an arithmetic mean roughness Ra of 0.2 $\mu$m or less in the roughness curve.

The arithmetic mean roughness Ra of the polished surface is the same as that in the method described above. The polished surface is observed at 200x magnification and, with an average area selected, an area of, for example, 7.2 $\times$ $10^4$ $\mu$m$^2$ (horizontal length 310 $\mu$m by vertical length 233 $\mu$m) is captured with a CCD camera to obtain an observation image.

For the observation image, the distance between the centers of gravity and the equivalent circle diameters of the closed pores may be determined by using image analysis software. As the image analysis software, for example, Image-Pro (manufactured by Hakuto Co., Ltd.), WinROOF2023 (manufactured by MITANI CORPORATION), and "A-Zou Kun (ver 2.52)" (trade name, manufactured by Asahi Kasei Engineering Corporation) can be used. When Image-Pro is used, closed pores on an image are regarded as particles, and equivalent circle diameters of the particles are measured. When Image-Pro is used, a center-to-center distance between the particles is measured, and this center-to-center distance can be used as a distance between centers of gravity of the closed pores. When WinROOF2023 is used as the image analysis software, closed pores on an image are regarded as particles, and equivalent circle diameters of the particles are measured. When WinROOF2023 is used, a distance between centers of gravity of the closed pores can be determined by a method called inter-particle distance measurement. When "A-Zou Kun (ver 2.52)" is used, a distance between centers of gravity of closed pores may be determined by a method called an inter-centroid distance method for dispersion measurement. Hereinafter, the term image analysis software "A-Zou Kun" refers to the image analysis software manufactured by Asahi Kasei Engineering Corporation throughout the description.

For example, setting conditions for this method may be as follows: a threshold is 165 which is used as a measure of image brightness/darkness, a brightness level is set to dark, a small figure removal area is 1 $\mu$m$^2$, and no noise reduction filter is set. The threshold can be adjusted according to the brightness of the observation image. The brightness level is set to dark, a binarization method is set to manual, the small figure removal area is set to 1 $\mu$m$^2$, and a noise reduction filter is set. Then, the threshold can be adjusted so that a marker appearing in the observation image matches the shape of the closed pore. For the equivalent circle diameter of the closed pores, a particle analysis method is used to determine the equivalent circle diameter of the closed pores by using the observation image as a target. The setting conditions for this method may be the same as the setting conditions for calculating the distance between the centers of gravity of the closed pores. The skewness of the equivalent circle diameter and the distance between the centers of gravity of the closed pores can be calculated using the Skew function provided in Excel (trade name of Microsoft Corporation).

An example of a method for manufacturing the inner pipe 21 made of such a ceramic will be described below. The inner pipe 21 made of a ceramic containing an aluminum oxide as the main constituent is described.

An aluminum oxide powder as the main constituent (having a purity of 99.9 mass% or more) and each powder of a magnesium hydroxide, a silicon oxide, and a calcium carbonate are fed into a grinding mill together with a solvent (ion exchange water) and ground until an average particle size of the powder ($D_{50}$) becomes equal to or less than 1.5 $\mu$m. Thereafter, an organic binder and a dispersing agent that disperses the aluminum oxide powder are added and mixed to prepare slurry.

Of the total of 100 mass% of the powders described above, the content of magnesium hydroxide powder is from 0.3 to 0.42 mass%, the content of silicon oxide powder is from 0.5 to 0.8 mass%, the content of calcium carbonate powder is from 0.06 to 0.1 mass%, and the remainder includes an aluminum oxide powder and incidental impurities. The organic binder is, for example, an acrylic emulsion, polyvinyl alcohol, polyethylene glycol, a polyethylene oxide, or the like.

Subsequently, the slurry is spray-granulated to obtain granules which are then pressurized at a molding pressure from 78 MPa to 118 MPa using a uniaxial press molding device or a cold isostatic press molding device to obtain a columnar powder compact. The powder compact may be cut, if necessary, to form a recess which becomes the recessed portion 28 after firing.

The powder compact is fired at a firing temperature of from 1580°C to 1780°C and a retention time of 2 hours to 4 hours to obtain the inner pipe 21 containing a ceramic. To obtain a ceramic having an interval between the closed pores of from 8 $\mu$m to 18 $\mu$m, the firing temperature may be set to 1600°C to 1760°C and the retention time may be set to 2 hours to 4 hours to fire the powder compact. A surface of a ceramic member facing the metal pipe 25 may be ground to form a ground surface. A surface of the recessed portion 28 on which the electrode 4 is located may be ground to form a bottom surface. Note that an inner diameter of the inner pipe 21 is preferably equal to or greater than 50 mm.

An inner peripheral wall 210 of the inner pipe 21 that forms the through hole 31 is preferably a fired surface which is not subjected to grinding or polishing processing. Accordingly, crystallinity of the inner peripheral wall 210 becomes higher than that of an inside of the inner pipe 21, and occurrence of cracks from the inner peripheral wall 210 can be reduced even when supply and stop of the cryogenic liquid are repeated.

The frame body portion 22a and the cover portion 22b constituting the housing 22 are preferably made of, for example, austenitic stainless steels (for example, SUS316L, SUS316LN, SUS304).

The annular portions 51a and 51b are preferably made of an alloy such as a Fernico alloy, an Fe-Ni alloy, an Fe-Ni-Cr-Ti-Al alloy, an Fe-Cr-Al alloy, an Fe-Co-Cr alloy, an Fe-Co alloy, an Fe-Co-C alloy, or an austenitic stainless steel having a nickel content of equal to or greater than 10.4 mass%. To ensure sufficient heat insulating performance, an outer diameter of each of the annular portions 51a and 51b may be equal to or greater than 1 mm with respect to an outer diameter of the inner pipe 21, may be equal to or greater than 10 mm with respect to the outer diameter of the inner pipe 21, may be equal to or less than 200 mm with respect to the outer diameter of the inner pipe 21, or may be equal to or less than 100 mm. The annular portions 51a and 51b are each hermetically bonded to the outer peripheral surface of the metal pipe 25 by brazing.

The outer pipe 26 is preferably made of a metal such as an austenitic stainless steel (for example, SUS316L) having a nickel content of equal to or greater than 10.4 mass%, or a ceramic such as silicon nitride, sialon, or the like.

The first hermetic terminal 81 constitutes a so-called hermetic connector, and includes the conductive pin 91, a first ceramic substrate 50a having a cylindrical shape and including a first pin hole in a thickness direction in which the conductive pin 91 is to be inserted, and a first annular body 52a surrounding an outer peripheral surface of the first ceramic substrate 50a. The first annular body 52a functions as a sleeve for holding the first ceramic substrate 50a, and preferably contains, for example, a Fernico alloy, an Fe-Ni alloy, an Fe-Ni-Cr-Ti-Al alloy, an Fe-Cr-Al alloy, an Fe-Co-Cr alloy, an Fe-Co alloy, an Fe-Co-C alloy, or an austenitic stainless steel having a nickel content equal to or greater than 10.4 mass%. This suppresses occurrence of embrittlement caused by liquid hydrogen and keeps the measurement accuracy of the void fraction over a long period of time.

Examples of the austenitic stainless steel having a nickel content equal to or greater than 10.4 mass% include SUS310S, SUS316L, SUS316LN, SUS316J1L, SUS317L, and the like.

The second hermetic terminal 82 includes the conductive pin 91, a second ceramic substrate 50b having a cylindrical shape and including a second pin hole in a thickness direction in which the conductive pin 91 is to be inserted, and a second annular body 52b surrounding an outer peripheral surface of the second ceramic substrate 50b. The second annular body 52b functions as a sleeve for holding the second ceramic substrate 50b, and can be made of the same material as the first annular body 52a described above.

The electrodes 4 can be made of, for example, copper foil, aluminum foil, or the like. The electrodes 4 can be formed on an outer peripheral surface of the inner pipe 21 by, for example, vacuum vapor deposition method, metallization, an active metal method, or the like. Alternatively, a metal plate serving as the electrode 4 may be bonded to the bottom surface of the recessed portion 28 which will be described later. A thickness of the electrode 4 may be equal to or greater than 10 $\mu$m, may be equal to or greater than 20 $\mu$m, may be equal to or less than 2 mm, and is preferably equal to or less than 1 mm.

The metal pipes 25 are disposed at both ends of the inner pipe 21 via the housing 22, and have the annular portions 51a and 51b welded or brazed to the outer peripheral surfaces thereof, respectively. Since the metal pipe 25 is connected to the inner pipe 21 via the housing 22, the inner pipe 21 is less likely to be broken by external impact. The metal pipes 25 welded or brazed to the annular portions 51a and 51b reduce leakage of liquid hydrogen from the inner pipe 21 to an outside, and the measurement accuracy of the void fraction is improved. Note that the metal pipe 25 may be a liquid hydrogen transfer pipe for transferring liquid hydrogen.

With respect to the filling member 29, an absolute value of a temperature coefficient $\tau\epsilon1$ of relative permittivity at -196°C to 20°C is preferably equal to or less than an absolute value of a temperature coefficient $\tau\epsilon2$ of relative permittivity of the inner pipe 21 at -196°C to 20°C. Accordingly, even when liquid hydrogen flows through the through hole 31 and a temperature change (temperature difference) increases on an outer peripheral side of the inner pipe 21, influence of a change in electrostatic capacitance between the electrode 4 and the housing 22 can be reduced and the void fraction can be accurately measured.

Here, a temperature coefficient of relative permittivity can be defined by the following equation.

A temperature coefficient of relative permittivity = {(relative permittivity at 20°C) - (relative permittivity at -196°C)}/{(20°C) - (-196°C)}

"At -196°C to 20°C" means a range from a liquefaction temperature of liquid nitrogen to room temperature. The reason why the range of -196°C to 20°C is adopted is that as long as the absolute value of the temperature coefficient $\tau\epsilon1$ described above is equal to or less than the absolute value of the temperature coefficient $\tau\epsilon2$ in this range, the range is also applicable to liquid hydrogen (a liquefaction temperature: -253°C).

The absolute value of the temperature coefficient $\tau\epsilon1$ of the relative permittivity of the filling member 29 is preferably equal to or less than 100 ppm/K. Accordingly, a large change in electrostatic capacitance between the electrode 4 and the housing 22 can be reduced, and accuracy of the void fraction can be improved.

Further, the absolute value of the temperature coefficient $\tau\epsilon2$ of the relative permittivity of the inner pipe 21 is preferably equal to or less than 1000 ppm/K. As a result, a difference between the absolute value of the temperature coefficient $\tau\epsilon1$ and the absolute value of the temperature coefficient $\tau\epsilon2$ becomes small, and the void fraction can be accurately measured.

The temperature coefficient of the relative permittivity can be measured by, for example, any one of the following methods.

> JIS R1627-1996 (Testing method for dielectric properties of fine ceramics at microwave frequency),
> ASTM D-150 (Standard Test Methods for AC Loss Characteristics and Permittivity (Dielectric Constant) of Solid Electrical Insulation),
> JIS C2141-1992 (Testing methods of ceramic insulators for electrical and electronic applications).

Among these measurement methods, the measurement method described in ASTM D150 or JIS C2141-1992 is preferably used.

When the temperature coefficients of the relative permittivity of the filling member 29 and the inner pipe 21 cannot be measured in their original shapes, the filling member 29 and the inner pipe 21 may be processed and processed products may be used to measure the temperature coefficients of the relative permittivity.

A positive or negative sign of the temperature coefficient $\tau\epsilon1$ is preferably different from a positive or negative sign of the temperature coefficient $\tau\epsilon2$. When the positive or negative sign of the temperature coefficient $\tau\epsilon1$ is different from the positive or negative sign of the temperature coefficient $\tau\epsilon2$, the influence of the change in electrostatic capacitance between the electrode 4 and the housing 22 is partially cancelled and reduced, and thus the measurement accuracy of the void fraction is improved.

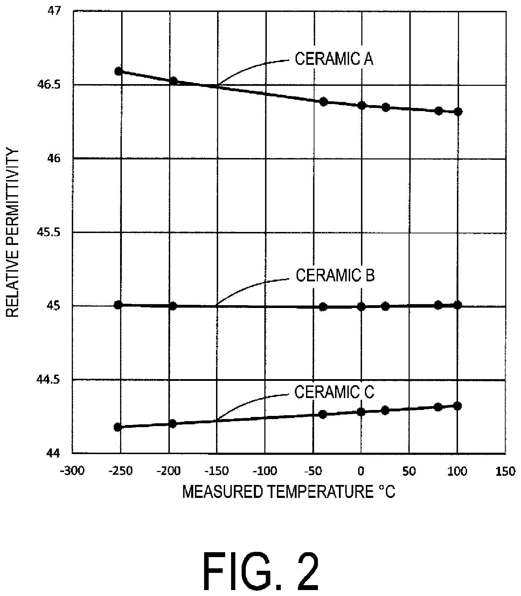

FIG. 2 is a graph for explaining temperature coefficient of relative permittivity of ceramics. That is, a fact is shown that a temperature coefficient of relative permittivity is negative for a ceramic A, 0 for a ceramic B, and positive for a ceramic C. Since the temperature coefficient of the relative permittivity represents an inclination of each of the ceramics A, B, and C in the graph of FIG. 2, the change in electrostatic capacitance due to the temperature change can be reduced for a temperature characteristic closer to 0. Therefore, the relative permittivity of the ceramic B has no temperature dependency and is most preferable as the filling member 29 and other materials. However, by setting the absolute value of the temperature coefficient $\tau\epsilon1$ of the relative permittivity of the filling member 29 to be equal to or less than the absolute value of the temperature coefficient $\tau\epsilon2$ of the relative permittivity of the inner pipe 21, although not zero (0), the influence of the change in electrostatic capacitance between the electrode 4 and the housing 22 can be reduced. Concretely, as described above, the absolute value of the temperature coefficient $\tau\epsilon1$ of the inner pipe 21 is preferably equal to or less than 100 ppm/K.

When a ceramic is used as the filling member 29 having the small temperature coefficient $\tau\epsilon1$ of the relative

permittivity, deterioration or deformation hardly occurs even when the temperature change becomes large due to the cryogenic liquid, and the void fraction can be accurately measured over a long period of time. Examples of such a ceramic include a ceramic containing aluminum oxide as a main constituent, for example. Alternatively, a ceramic containing, as a main constituent, an oxide containing at least a rare earth element (Ln), Al, M (M is at least one of Ca and Sr), and Ti as metal elements may be used. As the rare earth element (Ln), at least one type selected from the group consisting of scandium, yttrium, and lanthanoid elements is included. Here, the main constituent refers to a component accounting for equal to or greater than 60 mass%, particularly equal to or greater than 95 mass%, out of 100 mass% of all components constituting the ceramic.

Examples of the ceramic that can be used as the filling member 29 include a ceramic represented by a composition formula represented by a molar ratio of $n \cdot LnAlO_3 + m \cdot Sr_xCa_{1-x}TiO_3$ (in the formula, $0 \le x \le 1$, $n + m = 1$, n is 0.3 to 0.7, and m is 0.3 to 0.7). The temperature coefficient $\tau\varepsilon 1$ of relative permittivity of this ceramic is about -100 to 40 ppm/K. Examples of a ceramic suitable as the filling member 29 include a ceramic represented by a composition formula by a molar ratio of $n \cdot LaAlO_3 + m \cdot CaTiO_3$ as (in the formula, $n + m = 1$, n is 0.5 to 0.6, and m is 0.4 to 0.6). The temperature coefficient $\tau\varepsilon 1$ of relative permittivity of this ceramic is about 4.3 ppm/K.

On the other hand, a ceramic containing high-purity alumina of equal to or greater than 99.5 mass% that can be used as the inner pipe 21 has the temperature coefficient $\tau\varepsilon 2$ of relative permittivity of about 90 ppm/K. Examples of another ceramic having $|\tau\varepsilon 2|$ equal to or less than 1000 ppm/K that can be used as the inner pipe 21 include the following ceramic. A ceramic being an oxide containing Al and Ti as metal elements and has a composition formula expressed by a mass ratio of $yAl_2O_3 \cdot (1 - y)TiO_2$ (0.01 < y < 0.9). The ceramic with the composition formula has $\tau\varepsilon 2$ = about -270 ppm/K when y = 0.79, and $\tau\varepsilon 2$ = about -726 ppm/K when y = 0.48.

A temperature coefficient of relative permittivity of an organic polymer compound which can be used as the inner pipe 21 is described in detail in "Cryogenic Electrical Insulating Material" by Itaru Ishii et al., Journal of the Society of Cryogenic Engineering, Vol. 10, No. 5 (1975), pp. 161 to 168.

The filling member 29 can be manufactured as follows. Powders of a rare earth oxide such as $La_2O_3$, aluminum oxide, calcium carbonate and/or strontium carbonate, and titanium oxide are used as starting materials. These powders are weighed to have a composition formula by a molar ratio of $n \cdot LnAlO_3 + m \cdot Sr_xCa_{1-x}TiO_3$ (in the formula, $0 \le x \le 1$, $n + m = 1$, n is 0.3 to 0.7, and m is 0.3 to 0.7), and then pure water is added to obtain a mixed raw material. Thereafter, grinding is performed by a ball mill until an average particle size ($D_{50}$) of the powders contained in the mixed raw material becomes equal to or less than 2.0 $\mu$m, thereby obtaining a primary slurry. The primary slurry is dried and then calcined at 1150 to 1250°C for 1 to 10 hours to obtain a calcined product. Pure water is added to the resulting calcined product, and wet mixing and grinding are performed by a ball mill until the average particle size ($D_{50}$) becomes equal to or less than 2.0 $\mu$m to manufacture a secondary slurry. To the secondary slurry, 3 to 10 wt% of a water-soluble binder is added and mixed to manufacture a tertiary slurry. The tertiary slurry is granulated by a spray drying method or the like, to manufacture granules. The resulting granules are molded by a known molding method, for example, a die pressing method to manufacture a powder compact. The resulting powder compact is held and fired at 1500°C to 1600°C for 5 to 10 hours to manufacture the filling member 29 as a sintered body. The resulting sintered body may be processed into a shape of the filling member 29 as necessary. Here, the filling member 29 may be molded and fired to obtain the shape illustrated in FIG. 1, or a plurality of members including the ceramic described above may be combined and molded and fired into the shape illustrated in FIG. 1.

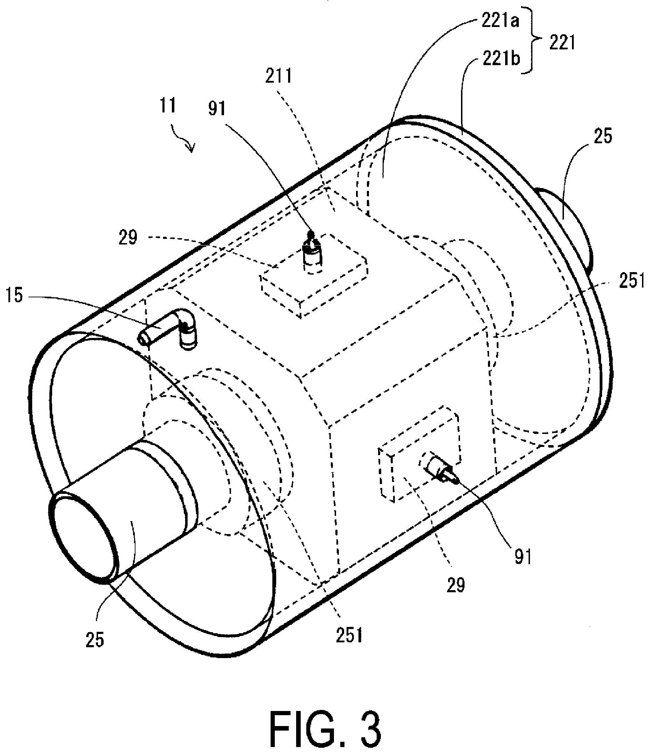

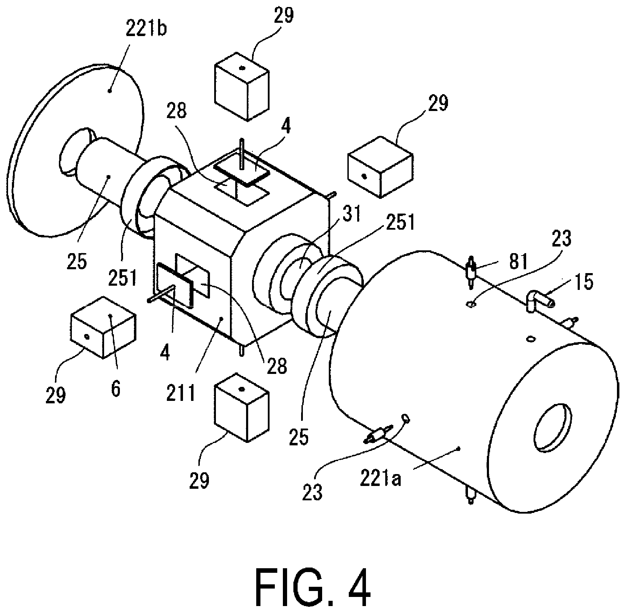

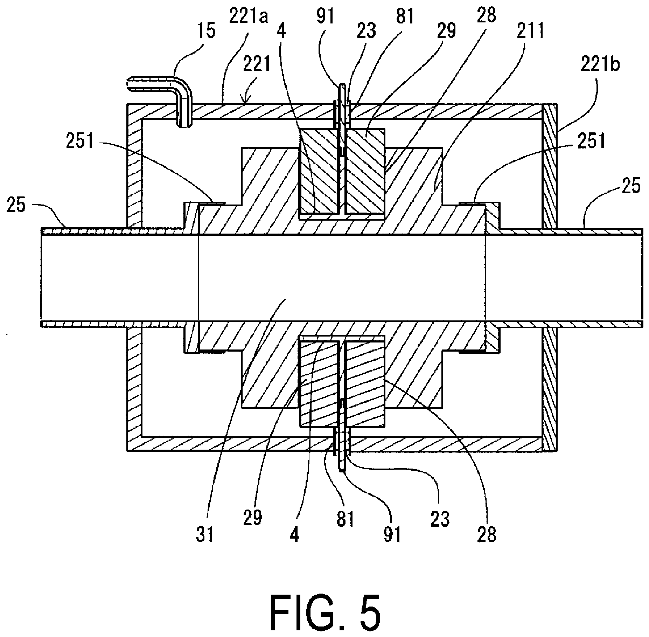

Next, another embodiment of the present disclosure will be described with reference to FIGs. 3 to 5. Note that the same constituent members as those illustrated in FIG. 1 are denoted by the identical reference signs, and descriptions thereof will be omitted. FIG. 3 is a perspective view illustrating a void fraction sensor of the embodiment, and FIG. 4 is an exploded perspective view thereof, and FIG. 5 is a cross-sectional view.

As illustrated in FIG. 3, a void fraction sensor 11 includes a housing 221 including a frame body portion 221a and a cover portion 221b, an inner pipe 211 accommodated inside the housing 221, and the metal pipe 25 inserted through the housing 221 and connected to the inner pipe 211. The housing 221 is provided with the vacuum exhaust valve 15. The frame body portion 221a and the cover portion 221b constituting the housing 221 are hermetically bonded to each other by brazing or welding, and an insertion portion of the vacuum exhaust valve 15 is also hermetically bonded in the same manner.

Exhaust from the vacuum exhaust valve 15 forms a vacuum space between the housing 221 and the inner pipe 211, and a heat insulating layer covering an outer peripheral side of the inner pipe 211.

As illustrated in FIGs. 4 and 5, the metal pipe 25 is provided with a recessed flange portion 251 at a tip thereof, and the flange portion 251 is fitted to an opening portion of the through hole 31 of the inner pipe 211 (see FIG. 5). The metal pipe 25 is hermetically bonded to the housing 221 by brazing or welding, and the flange portion 251 and the inner pipe 211 are also hermetically bonded to each other in the same manner.

The first insertion hole 23 for mounting the first hermetic terminal 81 is formed in an outer peripheral surface of the housing 221.

The inner pipe 211 is a tubular body including the through hole 31, and a central portion thereof is formed in a substantially rectangular parallelepiped shape, and ridge portions of the substantially rectangular parallelepiped shape are chamfered. The recessed portion 28 is formed in each of four surfaces, and the electrode 4 is mounted in each recessed portion 28. As illustrated in FIG. 3, one pair of the electrodes 4 and 4 facing each other via an axial center of the inner pipe 211 are located in each of directions orthogonal to each other in the inner pipe 211, for example, in a vertical direction and a horizontal direction of the inner pipe 211.

The filling member 29 is accommodated in the recessed portion 28 to which the electrode 4 is mounted. The filling member 29 is preferably in close contact with an inner wall surface of the recessed portion 28 without any gap, and even when there is a gap, the filling member 29 is preferably disposed to cover a back surface of the electrode 4.

A height of the filling member 29 is greater than a depth of the recessed portion 28, and thus the filling member 29 extends to a gap from a surface of the inner pipe 211 to the housing 221. Therefore, even when there is the gap between the inner pipe 211 and the housing 221, the filling member 29 at least partially fills the gap. Therefore, the filling member 29 filling the gap reduces the change in impedance, and as a result, improves the measurement accuracy of the void fraction.

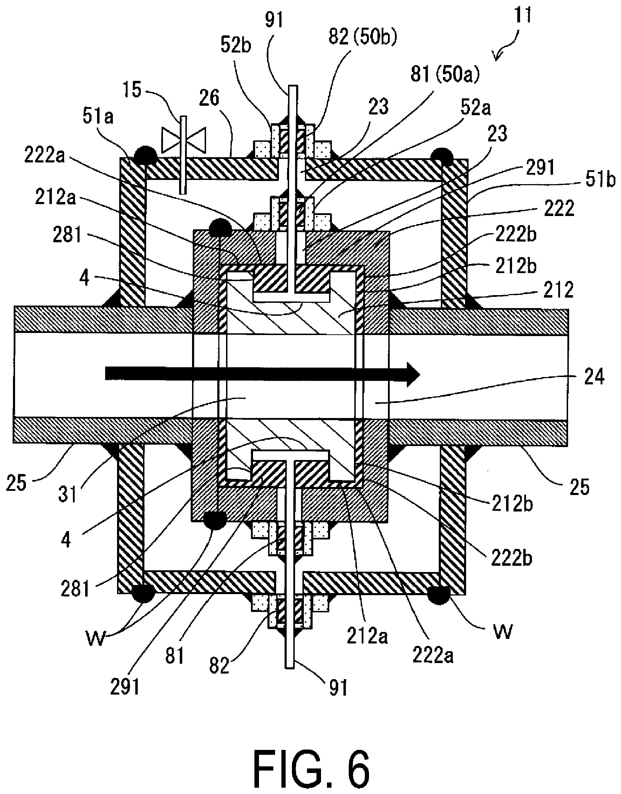

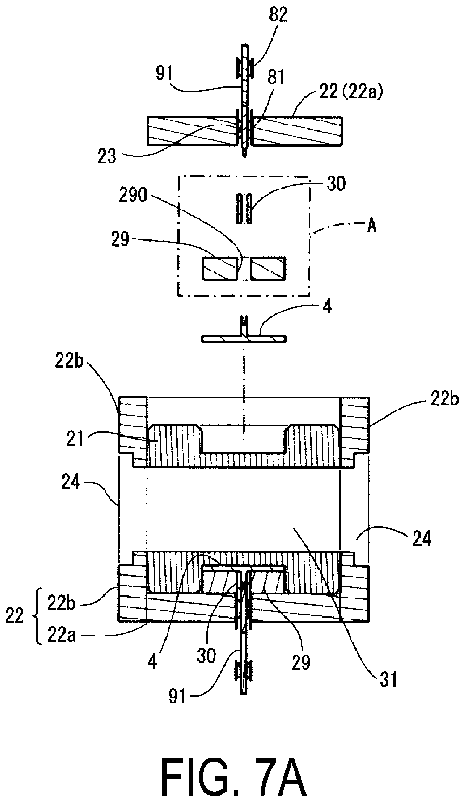

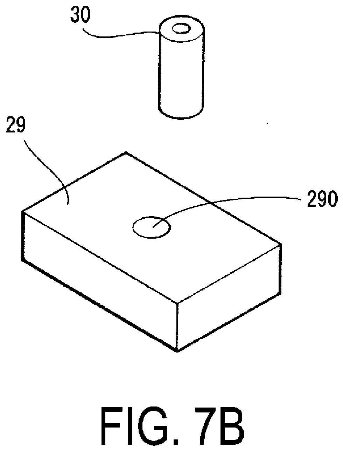

Next, a void fraction sensor according to still another embodiment of the present disclosure will be described with reference to FIGs. 6, 7A, and 7B. As illustrated in FIG. 6, in this embodiment, a filling member 291 is accommodated in a recessed portion 281 present on the back surface of each electrode 4, and extends from a gap between an outer peripheral surface 212a of an inner pipe 212 and an inner wall surface 222a of a housing 222 facing the outer peripheral surface 212a to a gap between each of both end surfaces 212b of the inner pipe 212 and an inner wall surface 222b of the housing 222 facing the end surface 212b. This eliminates the need for bonding such as brazing or welding between the end surface 212b of the inner pipe 212 and the inner wall surface 222b of the housing 222 facing the end surface 212b, thereby increasing a stress relieving effect of the inner pipe 212 and increasing a size of the inner pipe 212.

Such a filling member 291 can be manufactured by integrally molding the ceramic described above, but a ceramic having a predetermined shape may be manufactured for each necessary portion and accommodated in each space.

Other portions are the same as those of the embodiment described above. Thus, the identical reference signs are used, with description thereof being omitted.

FIG. 7A illustrates a partial variation of the void fraction sensor 1 illustrated in FIG. 1. As illustrated in FIG. 7A, an insulating tube 30 including an electrical conductor layer on an outer peripheral surface thereof is mounted to the conductive pin 91 between the electrode 4 and the first insertion hole 23. With this configuration, since the electrical conductor layer surrounds a vicinity of the conductive pin 91, influence of a change in relative permittivity between the electrode 4 and the housing 22 can be reduced to reduce the change in impedance, thereby further improving the measurement accuracy of the void fraction.

To be specific, as illustrated in FIG. 7B, the insulating tube 30 is inserted into a through hole 290 of the filling member 29, and a part thereof extends into the housing 22. As the insulating tube 30, for example, the same material as the filling member 29 can be used.

The insulating tube 30 may also include an electrical conductor layer on an inner peripheral surface thereof. This reduces the change in impedance, and as a result, improves the measurement accuracy of the void fraction. As the electrical conductor layer, for example, a metal layer containing Ag or Cu as a main constituent or a metal layer containing a brazing material such as an Ag-Cu-Ti-based brazing material can be used.

Other portions are the same as the embodiment illustrated in FIG. 1, so that the respective members are denoted by the identical reference signs, and detailed description thereof will be omitted. Note that the insulating tube 30 can also be applied to the embodiments illustrated in FIGs. 3 to 5, and 6 in the same manner.

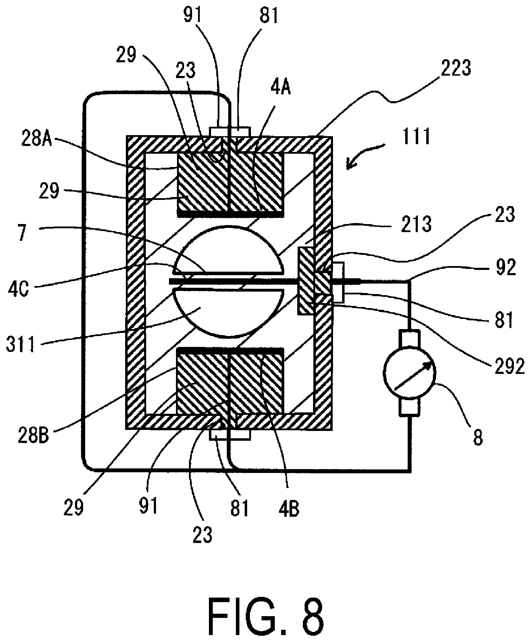

Next, a void fraction sensor according to a different embodiment of the present disclosure will be described with reference to FIG. 8. FIG. 8 is a schematic horizontal cross-sectional view illustrating a void fraction sensor 111 according to the present embodiment, that is, a schematic cross-sectional view orthogonal to an axial direction (direction perpendicular to a paper surface of FIG. 8) of an inner pipe 213 through which a cryogenic liquid flows.

In the void fraction sensor 111 of the present embodiment, one pair of a first electrode 4A and a second electrode 4B are mounted on an outer surface of the inner pipe 213 including a through hole 311 for causing the liquid hydrogen to flow, and an intermediate electrode 4C is disposed in the through hole 311 of the inner pipe 213.

The intermediate electrode 4C is located between the first electrode 4A and the second electrode 4B to face the first electrode 4A and the second electrode 4B along an axial direction of through hole 311 of the inner pipe 213. A cross section of the through hole 311 perpendicular to the axial direction is divided into two parts via a portion 7 including the intermediate electrode 4C.

As described above, with the intermediate electrode 4C disposed in the through hole 311 of the inner pipe 213, an electrostatic capacitance is measured between the first electrode 4A and the intermediate electrode 4C and between the second electrode 4B and the intermediate electrode 4C even when an inner diameter of the through hole 311 increases, thus reducing a distance between the electrodes and increasing the electrostatic capacitance. By disposing the intermediate electrode 4C to face the first electrode 4A and the second electrode 4B, an area of the intermediate electrode 4C can be set to be large, leading to an increase in an electrostatic capacitance accumulated between the electrodes and improving the measurement accuracy of the void fraction of liquid hydrogen.

The first electrode 4A and the second electrode 4B and the intermediate electrode 4C are all electrically connected to a capacitance measuring device 8, and measured values of electrostatic capacitances are displayed on the capacitance measuring device 8.

Also in the present embodiment, the filling members 29 are accommodated in recessed portions 28A and 28B present on back surfaces of the first electrode 4A and the second electrode 4B, respectively. A filling member 292 is located through which a conductive pin 92 connected to the intermediate electrode 4C is inserted. Each of the filling members 29 and 292 extends toward the first insertion hole 23 located in the housing 223, that is, toward the first hermetic terminal 81.

Other portions are the same as those of the embodiment described above. Thus, the identical reference signs are used, with description thereof being omitted.

Note that in the present disclosure, a cross section of the inner pipes 21, 211, 212, or 213 is not limited to a substantially quadrangular shape or a circular shape, and may be another polygonal shape. In the inner pipe 21, 211, 212, or 213, a plurality of ceramic members may be disposed in a circumferential direction of the through hole 31 or 311, and the ceramic members may be integrally bonded and formed. In that case, the number of ceramic members constituting the inner pipe 21, 211, 212, or 213 is preferably an even number, and for example, preferably two, four, six, or eight. This is because at least one pair of facing electrodes 4 and 4 are required to measure an electrostatic capacitance, and each electrode 4 is attached to a ceramic member.

Since the electrostatic capacitance is measured between the facing electrodes 4 and 4, the electrodes 4 need not be provided on all of the even number of ceramic members, and for example, the electrodes 4 may be located on at least one pair of ceramic members facing each other, respectively.

As described above, in the void fraction sensor 1, 11, or 111 of the present disclosure, the void fraction can be accurately measured with the influence of the change in electrostatic capacitance between the electrode 4 and the housing 22, 221, 222, or 223 reduced, even when the cryogenic liquid flows through the through hole 31 or 311 of the inner pipe 21, 211, 212, or 213 and the temperature change becomes large on the outer peripheral side of the inner pipe 21, 211, 212, or 213.

Next, a flowmeter according to an embodiment of the present disclosure will be described. The flowmeter measures a flow rate of liquid hydrogen flowing in the inner pipe 21, 211, 212, or 213, and includes the void fraction sensor 1, 11, or 111 described above, and a flow velocity meter that measures a flow velocity of the cryogenic liquid flowing through the through hole 31 or 311. The void fraction sensor 1, 11, or 111, and the flow velocity meter are attached to a liquid hydrogen transfer pipe which is not illustrated.

Since liquid hydrogen flowing through the through hole 31 or 311 is in a gas-liquid two-phase flow, the void fraction sensor 1, 11, or 111 measures an electrostatic capacitance of liquid hydrogen, from which a density d ($kg/m^3$) of liquid hydrogen can be determined.

A flow rate F (kg/s) is determined by the following equation, where v is the flow velocity (m/s) of liquid hydrogen determined at the flow velocity meter, and a is a cross-sectional area ($m^2$) of the through hole 31 or 311.

$$F = d \times v \times a$$

To calculate this equation, the flowmeter further includes a calculator to which the void fraction sensor 1, 11, or 111 and the flow velocity meter are connected. This facilitates the measurement of the flow rate of liquid hydrogen, leading to easier control when transferring a large amount of liquid hydrogen for industrial use.

The void fraction sensor 1, 11, or 111 for liquid hydrogen and the flowmeter using the same have been described above, but the contents of the present disclosure can be similarly applied to other cryogenic liquids, such as liquid nitrogen (-196°C), liquid helium (-269°C), liquefied natural gas (-162°C), liquid argon (-186°C) and the like (where each value in parentheses indicates a liquefaction temperature). Therefore, the cryogenic liquid in the present disclosure is liquid that is liquefied at a cryogenic temperature equal to or less than - 162°C.

Although the preferred embodiments of the present disclosure have been described above, the void fraction sensor according to the present disclosure is not limited thereto, and many changes and improvements can be made within the range set forth in the present disclosure.

REFERENCE SIGNS

1, 11, 111 Void fraction sensor
4 Electrode
4A First electrode
4B Second electrode
4C Intermediate electrode

7 Portion including intermediate electrode 4C
8 Capacitance measuring device
100 Vacuum space (heat insulating layer)
15 Vacuum exhaust valve
21, 211, 212, 213 Inner pipe
210 Inner peripheral wall
212a Outer peripheral surface
212b End surface
22, 221, 222, 223 Housing
22a, 221a Frame body portion
22b, 221b Cover portion
222a, 222b Inner wall surface
23 First insertion hole
24 Connection hole
25 Metal pipe
251 Flange portion
26 Outer pipe
27 Second insertion hole
28, 28A, 28B Recessed portion
29, 291, 292 Filling member
290 Through hole
30 Insulating tube
31, 311 Through hole
50a First ceramic substrate
50b Second ceramic substrate
51a, 51b Annular portion
52a First annular body
52b Second annular body
81 First hermetic terminal
82 Second hermetic terminal
91, 92 Conductive pin

**Claims**

1. A void fraction sensor comprising:

   an inner pipe comprising a through hole through which a cryogenic liquid flows;
   at least one pair of electrodes mounted on an outer surface of the inner pipe;
   a conductive pin connected to each of the at least one pair of electrodes;
   a housing surrounding the inner pipe and comprising a first insertion hole into which the conductive pin is inserted; and
   a filling member disposed at least between an inner wall surface of the housing and a back surface on an opposite side to a facing front surface of each of the at least one pair of electrodes, wherein
   an absolute value of a temperature coefficient $\tau_{\varepsilon}1$ of relative permittivity of the filling member at -196°C to 20°C is equal to or less than an absolute value of a temperature coefficient $\tau_{\varepsilon}2$ of relative permittivity of the inner pipe at -196°C to 20°C.

2. The void fraction sensor according to claim 1, wherein
   the absolute value of the temperature coefficient $\tau_{\varepsilon}1$ is equal to or less than 100 ppm/K.

3. The void fraction sensor according to claim 2, wherein
   the absolute value of the temperature coefficient $\tau_{\varepsilon}2$ is equal to or less than 1000 ppm/K.

4. The void fraction sensor according to any one of claims 1 to 3, wherein
   a positive or negative sign of the temperature coefficient $\tau_{\varepsilon}1$ is different from a positive or negative sign of the temperature coefficient $\tau_{\varepsilon}2$.

5. The void fraction sensor according to any one of claims 1 to 4, wherein
the filling member contains a ceramic.

6. The void fraction sensor according to claim 5, wherein
the ceramic contains, as a main constituent, aluminum oxide or an oxide containing at least a rare earth element (Ln), Al, M (M is at least one of Ca and Sr), and Ti as metal elements.

7. The void fraction sensor according to any one of claims 1 to 5, wherein
the filling member extends into the first insertion hole of the housing.

8. The void fraction sensor according to any one of claims 1 to 7, wherein
the filling member extends to a gap between an end surface of the inner pipe and the inner wall surface of the housing facing the end surface of the inner pipe.

9. The void fraction sensor according to any one of claims 1 to 8, wherein
an insulating tube comprising an electrical conductor layer on an outer peripheral surface thereof is mounted to the conductive pin and interposed between an electrode of the at least one pair of electrodes and the first insertion hole.

10. The void fraction sensor according to claim 9, wherein
the insulating tube comprises the electrical conductor layer also on an inner peripheral surface thereof.

11. The void fraction sensor according to any one of claims 1 to 10, wherein
an outer peripheral side of the housing is covered with a heat insulating layer.

12. The void fraction sensor according to claim 11, further comprising:

an outer pipe comprising a second insertion hole; and
a second hermetic terminal located in the second insertion hole and fixing the conductive pin connected to an electrode of the at least one pair of electrodes individually in the second insertion hole, wherein
the heat insulating layer is a vacuum space located at least between the housing and the outer pipe.

13. The void fraction sensor according to any one of claims 1 to 12, wherein
an inner peripheral wall of the inner pipe forming the through hole is a fired surface.

14. The void fraction sensor according to any one of claims 1 to 13, wherein
an intermediate electrode for measuring an electrostatic capacitance is located between one pair of electrodes facing each other of the at least one pair of electrodes.

15. A flowmeter for measuring a flow rate of a cryogenic liquid flowing through the through hole, the flowmeter comprising:

the void fraction sensor according to any one of claims 1 to 14; and
a flow velocity meter configured to measure a flow velocity of the cryogenic liquid flowing through the through hole.

16. A cryogenic liquid transfer pipe comprising the flowmeter according to claim 15.

# FIG. 1

# FIG. 2

# FIG. 3

FIG. 4

FIG. 5

FIG. 6

FIG. 7A

30

29

290

# FIG. 7B

FIG. 8

## INTERNATIONAL SEARCH REPORT

| International application No. |
|---|
| **PCT/JP2023/041117** |

| A. | CLASSIFICATION OF SUBJECT MATTER |
|---|---|

*G01N 27/22*(2006.01)i
FI:   G01N27/22 Z

According to International Patent Classification (IPC) or to both national classification and IPC

| B. | FIELDS SEARCHED |
|---|---|

Minimum documentation searched (classification system followed by classification symbols)

G01F1/56-G01F1/90; G01N27/00-G01N27/10; G01N27/14-G01N27/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | Microfilm of the specification and drawings annexed to the request of Japanese Utility Model Application No. 190311/1987 (Laid-open No. 93559/1989) (MITSUBISHI HEAVY INDUSTRIES, LTD.) 20 June 1989 (1989-06-20) | 1-16 |
| A | WO 2022/124377 A1 (KYOCERA CORPORATION) 16 June 2022 (2022-06-16) | 1-16 |
| A | WO 2022/163779 A1 (KYOCERA CORPORATION) 04 August 2022 (2022-08-04) | 1-16 |
| A | WO 2022/124375 A1 (KYOCERA CORPORATION) 16 June 2022 (2022-06-16) | 1-16 |
| A | WO 2022/124376 A1 (KYOCERA CORPORATION) 16 June 2022 (2022-06-16) | 1-16 |
| A | JP 62-231175 A (AGENCY OF IND SCIENCE & TECHNOL) 09 October 1987 (1987-10-09) | 1-16 |
| A | US 5017879 A (SCHLUMBERGER TECHNOLOGY CORPORATION) 21 May 1991 (1991-05-21) | 1-16 |
| A | US 2015/0160147 A1 (UNIVERSITEIT GENT) 11 June 2015 (2015-06-11) | 1-16 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/041117**

| Patent document cited in search report | | | Publication date (day/month/year) | Patent family member(s) | | | Publication date (day/month/year) |
|---|---|---|---|---|---|---|---|
| JP | 1-93559 | U1 | 20 June 1989 | (Family: none) | | | |
| WO | 2022/124377 | A1 | 16 June 2022 | CN | 116547501 | A | |
| | | | | KR | 10-2023-0098645 | A | |
| WO | 2022/163779 | A1 | 04 August 2022 | (Family: none) | | | |
| WO | 2022/124375 | A1 | 16 June 2022 | CN | 116529567 | A | |
| | | | | KR | 10-2023-0098643 | A | |
| WO | 2022/124376 | A1 | 16 June 2022 | CN | 116547468 | A | |
| | | | | KR | 10-2023-0098644 | A | |
| JP | 62-231175 | A | 09 October 1987 | (Family: none) | | | |
| US | 5017879 | A | 21 May 1991 | EP | 308004 | A2 | |
| US | 2015/0160147 | A1 | 11 June 2015 | WO | 2013/178813 | A1 | |
| | | | | EP | 3654025 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0193559 B

**Non-patent literature cited in the description**

- **ITARU ISHII et al.** Cryogenic Electrical Insulating Material. *Journal of the Society of Cryogenic Engineering*, 1975, vol. 10 (5), 161-168